# EUROPÄISCHE PATENTSCHRIFT

(11) **EP 0 948 944 B1**
(45) Veröffentlichungstag und Bekanntmachung des Hinweises auf die Patenterteilung: **14.07.2004**
(21) Anmeldenummer: 99104974.3
(22) Anmeldetag: 12.03.1999
(51) Int. Cl.: A61C 19/00

(54) **Netzbetriebenes Lichthärtgerät**
Line operated light curing apparatus
Appareil de photopolymérisation alimenté par le réseau

(30) Priorität: 08.04.1998 DE 19815846
(43) Veröffentlichungstag der Anmeldung: 13.10.1999
(73) Patentinhaber: Ivoclar Vivadent AG, 9494 Schaan (LI)
(72) Erfinder: Eggler, Andreas, Dr., 6922 Wolfurt (AT); Rohner, Gottfried, 9450 Altstätten (CH)
(74) Vertreter: Baronetzky, Klaus, Dipl.-Ing.

(56) Entgegenhaltungen:
- DE-A- 3 840 984
- US-A- 4 839 566
- US-A- 5 184 044

## Beschreibung

Die Erfindung betrifft ein netzbetriebenes Lichthärtgerät gemäß dem Oberbegriff von Anspruch 1.

Lichthärtgeräte für die Dentaltechnik werden entweder als netzbetriebene Lichthärtgeräte oder als akkubetriebene Lichthärtgeräte hergestellt. Während akkubetriebene Lichthärtgeräte Vorteile hinsichtlich der Handhabung gerade dann bieten, wenn sie als Handgeräte ausgebildet sind, nachdem ein kabelfreier Betrieb möglich ist, haben netzbetriebene Lichthärtgeräte den Vorteil, daß sie unabhängig von der Halterung von Akkumulatoren sind, keiner Wiederaufladung und Betriebszeitüberwachung bedürfen und ihre Lichtleistung gleichmäßig, also unabhängig vom Ladezustand von Akkumulatoren, abgeben können, wobei die Lichtleistung zudem meist höher ist.

Als Lichtquellen für netzbetriebene Lichthärtgeräte werden meist handelsübliche Niedervolt-Kinoprojektionslampen entweder mit gehäusefestem Reflektor oder mit integriertem Reflektor eingesetzt, wie es beispielsweise aus der DE-OS 28 41 112 seit längerem bekannt ist Ein anderes netzbetriebenes Lichthärtgerät dieser Art ist aus der DE-OS 38 40 984 bekannt. Aufgrund der erheblichen Erwärmung einer derartigen Lampe muß diese intensiv gekühlt werden, was ein entsprechend starkes Gebläse bedingt. Der Luftstrom des Gebläses ist meist so ausgelegt, daß er den Behandlungsbereich des Geräts nicht betrifft, wobei aber auch ein Ausblasen nach hinten den behandelnden Zahnarzt gerade dann stören kann, wenn das Lichthärtgerät als Handgerät ausgebildet ist.

Beim Einsatz eines netzbetriebenen Lichthärtgerätes muß ein Transformator eingesetzt werden, der meist in einer zusätzlichen Basisstation vorgesehen ist, wobei sich das Versorgungskabel für das Handgerät zwischen dem Handgerät und der Basisstation erstreckt. Gerade bei hohen Leistungen gibt ein Transformator ein entsprechend starkes elektromagnetisches Feld ab, das in Zahnarztpraxen unerwünscht ist, nachdem hierdurch empfindliche andere Geräte mit Sensoren gestört werden können, und die Diagnoseergebnisse dieser Geräte in Frage gestellt werden können. Daher wäre bei entsprechend starken Transformatoren eine Kapselung des Gehäuses der Speisestation wünschenswert, die allerdings die erforderliche Kühlung behindern würde und insofern in der Praxis meist nicht realisiert wird. Daher wird empfohlen, die Speisestationen räumlich entsprechend stark beabstandet von den Handgeräten und übrigen Diagnosegeräten anzuordnen, was jedoch ein entsprechend langes Versorgungskabel bedingt und hinsichtlich der Handhabung etwas unbefriedigend ist.

Es ist auch bereits vorgeschlagen worden, die üblichen Transformatoren durch Schaltnetzteile zu ersetzen. Diese erlauben zwar eine Verminderung des Gewichts der Speisestation, neigen jedoch dazu, höherfrequente Strahlung abzugeben, die dann besonders sorgfältig abgeschirmt werden muß, um Störungen zu vermeiden. Zudem weisen derartige Schaltnetzteile ein Vielzahl elektronischer Bauteile auf und sind, nachdem eine Anpassung an den Verwendungszweck erforderlich ist, vergleichsweise aufwendig herzustellen.

Ein Nachteil der bislang verwendeten Lichthärtgeräte - soweit sie netzbetrieben sind - liegt ferner darin, daß der je verwendete Transformator nicht nur kostenintensiv ist. Das Vorhandensein einer Basisstation stört grundsätzlich in einer Zahnarztpraxis, nachdem es sich hier um ein Zusatzgerät handelt, daß zwar bisher für die Funktion notwendig war, jedoch als Hilfsgerät für das pistolenförmige Lichthärtgerät gelten konnte.

Bei Lichthärtgeräten, gerade wenn sie als Handgeräte ausgebildet sind, ist meist ein sogenannter Softstart erwünscht. Die an die Lichtquelle angelegte elektrische Leistung wird langsam, also über einen Zeitraum von beispielsweise 4 Sekunden, hochgefahren, allein schon um zu verhindern, daß ein Patient versehentlich geblendet wird, wenn abrupt die volle Lichtleistung abgegeben wird, während der Softstart dem Patienten die Möglichkeit gibt, die Augen zu schließen oder den Kopf wegzudrehen.

Zusätzlich zu dem Transformator ist daher eine entsprechende Elektronik in der Speisestation erforderlich, die eine Gleichrichtung und Glättung der vom Transformator abgegebenen Wechselspannung erfordert und insofern den Schaltungsaufwand vergrößert. Zudem muß bei den bekannten Lichthärtgeräten mit Softstart die Leistungselektronik in der Speisestation untergebracht werden. Bei hochwertigen Lichthärtgeräten ist eine Erfassung der abgegebenen Lichtleistung hingegen im Bereich des Handgeräts erforderlich, was einen sich über das Versorgungskabel erstreckenden Regelkreis bedingt.

Lichtpolymerisierbare Dentalmassen müssen während des Polymerisationszyklus vollständig durchgehärtet werden, um zu verhindern, daß die Füllung weich bleibt und es zur Randspaltenbildung bzw. zu Sekundärkaries kommen kann.

Aufgrund der guten Handhabbarkeit bevorzugen Zahnärzte lichtpolymerisierbare Dentalmassen auch bei komplexen Füllungen mit einer entsprechend großen Füllungstiefe. Bei derartigen Füllungen ist die Gefahr umso größer, daß die tiefliegenden Bereiche nicht vollständig polymerisiert werden können. Versuche haben ergeben, daß die zur Verfügung stehenden lichtpolymerisierbaren Dentalmassen, die einen möglichst geringen Schwund beim Polymerisieren aufweisen sollen, einen Teil der für die Polymerisation erforderlichen Lichtleistung absorbieren, so daß mit zunehmender Eindringtiefe des Lichts die Polymerisation gerade durch die Absorption des UV-Anteils des Lichts schlechter wird. Dieser Effekt läßt sich auch durch eine entsprechend längere Polymerisationszeit nicht oder nur unbefriedigend kompensieren, zumal eine lange Polymerisationszeit sowohl vom Patienten als auch vom Zahnarzt als unzumutbar empfunden wird.

Daher liegt der Erfindung die Aufgabe zugrunde, ein Lichthärtgerät gemäß dem Oberbegriff von Anspruch 1 zu schaffen, das eine deutliche reduzierte Polymerisationszeit erlaubt, dennoch eine sichere Lichthärtung auch tiefliegender Bereiche der Dentalmassen sicherstellt und vergleichsweise preisgünstig herzustellen und hinsichtlich der Handhabung verbessert ist.

Diese Aufgabe wird erfindungsgemäß durch Anspruch 1 gelöst. Vorteilhafte Weiterbildungen ergeben sich aus den Unteransprüchen.

Überraschend ermöglicht das erfindungsgemäße Lichthärtgerät mit der deutlich vergrößerten Lichtleistung eine sichere Durchhärtung auch tiefliegender Füllungsbereiche. Offenbar wird die erfindungsgemäß starke und sehr helle Lichtstrahlung bei tiefliegenden Füllungen gerade auch durch das Dentin des Zahnes reflektiert, wobei die reflektierte Strahlung zur Lichthärtung der tiefliegenden Füllungsschichten beiträgt. Aufgrund der mehr oder weniger schlagartigen Polymerisation ist die Dämpfungswirkung der oberen Bereiche der Dentalmassen auch bei recht opaken Dentalmassen weniger stark ausgeprägt, so daß insgesamt das Polymerisationsergebnis verbessert wird.

Zwar wird durch die enorm schnelle Polymerisation die Wärmebelastung der entsprechenden Dentalmasse erhöht. Die Wärmebelastung erfolgt jedoch so kurzzeitig, daß keine Wärmeschädigung des Zahnes, der die Füllung aufweist, auftreten kann, nachdem der Zahn sich vor der Polymerisation regelmäßig auf Körpertemperatur befindet und kurzzeitige Wärmespitzen von ihm gut abführbar sind.

Erfindungsgemäß besonders günstig ist es, daß durch die Verwendung einer transformatorfreien Steuerschaltung die entsprechende elektromagnetische Strahlung entfällt, so daß keine Störungen von Diagnostikgeräten verursacht werden können. Zwar läßt sich bei Bedarf ein Softstart über eine Phasenanschnittsteuerung mit Thyristoren oder Triacs realisieren. Aufgrund der erfindungsgemäß verlängerten Glühwendel der in Halogentechnik ausgeführten Lichtquelle entsteht jedoch auch beim normalen Start eine Verzögerung von etwa einer knappen Sekunde, bis die volle Lichtleistung anliegt. Die erfindungsgemäße Lichtquelle ermöglicht damit eine Art integrierten Softstart ohne zusätzliche elektronische Bauteile. Besonders günstig ist es, daß die Speisestation, die bei den bisherigen Lichthärtgeräten regelmäßig zusätzlich zu einem Handgerät erforderlich war, erfindungsgemäß vollständig entfallen kann. Das einzige verbleibende Kabel erstreckt sich bevorzugt unmittelbar vom unteren Ende des Handgriffs des Handgeräts zu einer beliebigen Netzsteckdose. Ein Leitungsquerschnitt von 0.75 mmm² ist vollständig ausreichend, auch wenn eine Lichtquelle mit einer elektrischen Nennleistung von 500 W verwendet wird, so daß das Kabel entsprechend flexibel sein kann. Eine Regelung der Lichtleistung kann entfallen, nachdem aufgrund der stark vergrößerten Leistungsreserven geringe Netzspannungsschwankungn nicht ins Gewicht fallen. Die Wirtschaftlichkeit des erfindungsgemäßen Lichthärtgeräts ist damit wesentlich erhöht, nachdem die Steuerschaltung bei Bedarf auf einen Ein/Aus-Schalter reduziert werden kann, der in einer vorteilhaften Ausgestaltung lediglich mit einem Betriebsstundenzähler gekoppelt ist, der beispielsweise bei 500 oder 1000 Betriebsstunden sicherheitshalber ein Signal abgibt, das an den Lampenwechsel erinnert.

Durch die erfindungsgemäß hohe Lichtleistung läßt sich trotz stark reduziertem konstruktivem Aufwand eine wesentliche Verbesserung der Lichthärtung der zu polymerisierenden Dentalmassen gewährleisten, und zwar auch dann, wenn das Lichthärtgerät als stationäres Gerät ausgebildet ist, das für die Lichthärtung von Prothesen oder Kronen und Brücken eingesetzt werden kann.

Besonders günstig ist es ferner, daß durch Einsparung des bislang erforderlichen Transformators erhebliche Kosten gespart werden können, wie auch daß durch die Vermeidung der Basisstation der Platzbedarf des erfindungsgemäßen Lichthärtgeräts deutlich reduziert ist. Der Wirkungsgrad des erfindungsgemäßen Lichthärtgeräts ist erheblich erhöht, nachdem die im Bereich der Basistation bislang angefallene Verlustleistung, die zur Erwärmung des Transformators und der für die Regelung erforderlichen elektronischen Komponenten führte, vollständig entfallen kann.

Die Aushärtung der verwendeten lichtpolymerisierbaren Dentalmassen hängt in erheblichem Maße von der Transluzenz des Materials ab. Auch bei sehr opakem Füllungsmaterial ergibt sich aber mit der erfindungsgemäß verbesserten Wirksamkeit ein besseres Härtergebnis.

Bevorzugt ist der Reflektor der Lichtquelle in an sich bekannter Weise für Infrarotstrahlung im wesentlichen durchlässig, so daß ein Großteil der Infrarotstrahlung nach hinten abgeführt wird und die Dentalmasse nicht beaufschlagt.

Besonders günstig ist gemäß einer vorteilhaften Ausgestaltung der Erfindung, daß die erfindungsgemäße Lichtquelle mit integriertem Reflektor und Schutzglas ausgestattet sein kann. Der Glühkolben der erfindungsgemäßen Lichtquelle kann sich dann geschützt auf beispielsweise 250° C erwärmen, ohne daß das Schutzglas über dem Reflektor dementsprechend heiß würde. Der Reflektor kann gezielt so ausgerichtet sein, daß trotz der verlängerten Glühwendel eine gute Fokussierung auf das Lichtleiter-Eintrittsende möglich ist.

Bevorzugt ist es vorgesehen, sowohl die Schutzglasscheibe als auch ein Kantenfilter auf dem Lichtleiter-Eintrittsende für Infrarotstrahlung reflektierend auszugestalten. Hierdurch läßt sich eine doppelte Reduktion des Infrarotanteils erzielen, der weiter zur Reduktion der Wärmebelastung im Mund des Patienten beiträgt.

Gemäß einer weiteren bevorzugten Ausgestaltung ist die Glühwendel in an sich bekannter Weise als mindestens zweifach abgebogene Doppelwendel ausgebildet. Sie kann sich bei dieser Ausgestaltung mit einer radialen Abweichung von maximal 3 mm von der optischen Achse im Brennpunkt des Reflektors erstrecken, obwohl eine Wendellänge von 4 cm möglich ist.

Weitere Vorteile, Einzelheiten und Merkmale ergeben sich aus der nachstehenden Beschreibung eines Ausführungsbeispiels anhand der Zeichnung.

Es zeigen:
- Fig. 1: eine schematische Ansicht eines erfindungsgemäßen Lichthärtgeräts;
- Fig. 2: eine Seitenansicht einer Glühwendel für eine erfindungsgemäße Lichtquelle zur Verwendung in dem Lichthärtgerät gemäß Fig. 1; und
- Fig. 3: eine Vorderansicht einer Glühwendel der Lichtquelle gemäß Fig. 2.

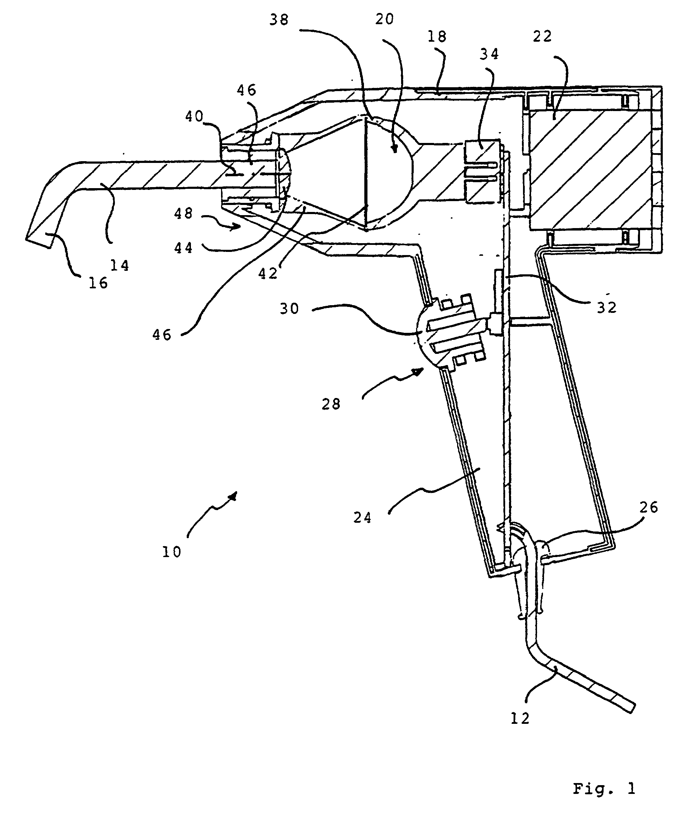

Die in Fig. 1 dargestellte Ausführungsform des Lichthärtgeräts 10 weist ein Handgerät auf, das über ein Netzkabel 12 unmittelbar mit einer Netzsteckdose verbindbar ist. Das erfindungsgemäße Lichthärtgerät ist im wesentlichen in Pistolenform ausgebildet und weist an seinem vorderen Ende in üblicher Weise einen Lichtleiter 14 mit abgebogenem Ende 16 auf, der dazu bestimmt ist, in den Mund eines Patienten eingeführt zu werden, um dort die Lichthärtung vorzunehmen. Ferner weist das Lichthärtgerät einen Korpus 18 auf, der die Lichtquelle 20 und ein Gebläse 22 aufnimmt, sowie einen Griff 24, der dem Lichthärtgerät 10 im wesenlichen Pistolenform gibt und von dessen unteren Ende sich das Netzkabel 12 wegerstreckt.

Der Griff nimmt eine Zugsicherung 26 für das Netzkabel 12 und eine Steuerschaltung 28 für das Lichthärtgerät auf. Die Steuerschaltung 28 ist in dem dargestellten Ausführungsbeispiel auf einen Ein-/Aus-Schalter 30 beschränkt, der auf einer Platine 32 angebracht ist. Die Platine 32 ist so vorbereitet, daß bei entsprechender Bestückung mit Thyristoren eine Phasenanschnittssteuerung zur automatischen·Bereitstellung eines Softstarts realisierbar ist, die bei der Ausführung ohne Softstart kurzerhand durch entsprechende Drahtbrücken überbrückt ist.

An die Steuerschaltung 28 ist ferner das Gebläse 22 angeschlossen, das durch den Schalter 30 ein- und ausschaltbar ist.

Gemäß einer anderen Ausgestaltung ist es vorgesehen, das Gebläse 22 unmittelbar mit dem Netzkabel 12 zu verbinden, so daß das Gebläse 22 stets dann läuft, wenn das Netzkabel 12 in die nicht dargestellte Netzsteckdose eingesteckt ist.

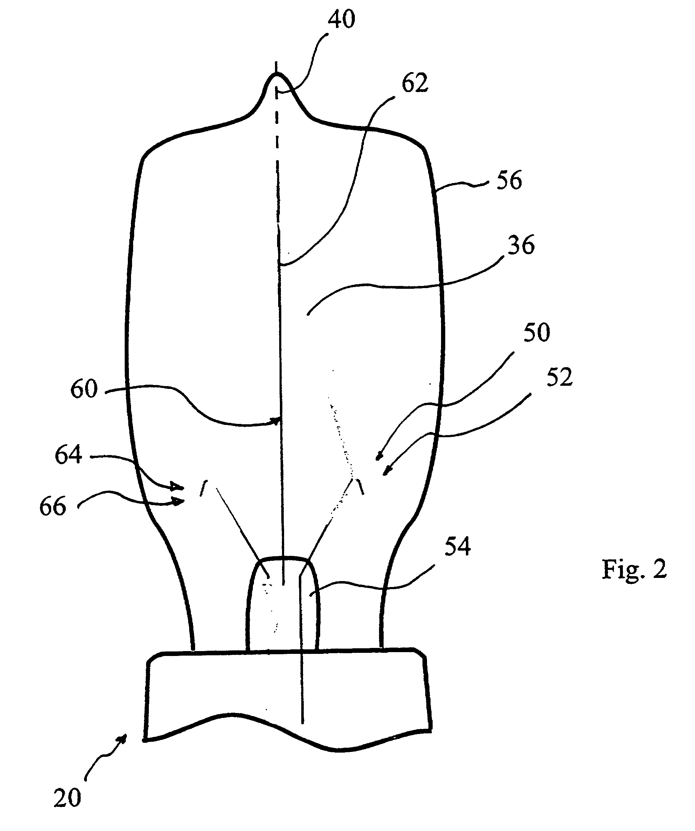

Die Platine 32 trägt zudem eine Fassung 34 für die Lichtquelle 20. Die Lichtquelle 20 weist eine aus Fig. 2 ersichtliche Glühwendel 36 und einen Reflektor 38 auf, wobei sich der Reflektor 38, die Glühwendel 36 und der Lichtleiter 14 entlang einer optischen Achse 40 erstrecken.

Die Lichtquelle 20 ist ferner mit einer Schutzglasscheibe 42 ausgerüstet, die infrarotreflektierend beschichtet ist. Gleiches gilt für eine konvexe Linse 44, die am Lichteintrittsende 46 des Lichtleiters 14 angeordnet ist. Der Raum zwischen der Schutzglasscheibe 42 und der Linse 44 ist staubdicht versiegelt und von einem Gegenkonus 46 umgeben, der innen verspiegelt ist und der Verbesserung der Lichtausbeute dient.

Der Kühlluftstrom des Gebläses ist außen an dem Gegenkonus 46 und an dem ebenfalls mit Kühlrippen ausgestatteten Reflektor 38 entlang vorgesehen, wobei Lufteintrittsöffnungen 48 dem Lichteintrittsende 46 benachbart und dieses umgebend vorgesehen sind.

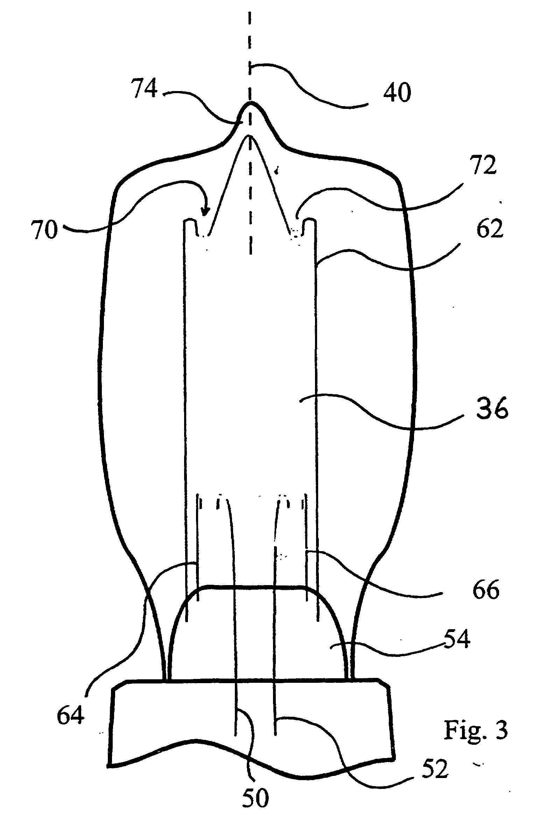

Eine vergrößerte Ansicht der erfindungsgemäßen Glühwendel ist aus Fig. 2 und 3 ersichtlich.

Die in Fig. 2 dargestellte Lichtquelle 20 weist eine Glühwendel 36 auf, die sich symmetrisch zur optischen Achse 40 im wesentlichen V-förmig erstreckt. Sie ist an Elektroden 50 und 52 angeschlossen, die in an sich bekannter Weise in einen Glasstutzen 54 eingebettet sind. In der bei Halogentechnik üblichen Weise erstreckt sich ein Glüh-Quarzkolben 56 mit einem vergleichsweise geringen Durchmesser von beispielsweise 1 cm im wesentlichen in Längsrichtung der optischen Achse, und zwar über eine Länge von etwa 2 cm.

Der Lampenkolben 56 ist mit einem Halogenzusatz zum Füllgas gefüllt, wobei beispielsweise Brommethan eingesetzt werden kann. Die Glühwendel 36 erstreckt sich an ihrer am weitesten von der optischen Achse entfernten Stelle in einem Abstand von knapp 3 mmm von dieser, wobei die zentrale Mitte 60 der Glühwendel mit dem Brennpunkt des Reflektors zusammenfällt. Die Glühwendel 36 ist an ihrem vorderen Bereich über einen Haltedraht 62 geführt, dessen Ausgestaltung besser aus Fig. 3 ersichtlich ist. Den Elektroden 50, 52 gegenüberliegend sind Gegenhaltedrähte 64 in den Glasstutzen 54 eingebettet, die sich im wesentlichen symmetrisch zu der Elektrode 50 erstrecken.

Wie aus Fig. 3 ersichtlich ist, sind die Gegenhaltedrähte 64, 66 zudem auch in der Draufsicht seitlich abgebogen, so daß sich in der Draufsicht eine im wesentlichen U-förmige Anordnung der Glühwendel 36 ergibt.

In dem dargestellten, bevorzugten Ausführungsbeispiel sind die Gegenhaltedrähte 64 und 66 der optischen Achse 40 benachbart eingebettet. Hieran anschließend sind die Elektroden 50 und 52 angeordnet, während der Glaskolben 54 relativ weit außen den Haltedraht 62 trägt, der sich im wesentlichen über die gesamte Länge des Glasstutzens erstreckt. Im vorderen Bereich weist der Haltedraht 62 in an sich bekannter Weise Lagerausnehmungen 70, 72 für die Glühwendel 36 auf und ist der Spitze 74 des Quarzkolbens benachbart innen an diesem abgestützt. Diese Ausgestaltung erlaubt eine relativ erschütterungssichere Lagerung, wobei die freie Traglänge der Wendel 4 mal etwa 1 cm beträgt.

Die Glühwendel 36 ist als Doppelwendel ausgeführt, wobei der Wendeldurchmesser der Innenwendel etwa 0.05 mm und der Wendeldurchmesser der Außenwendel etwa 0.4 mm beträgt. Diese Wendelung erlaubt es, die erforderliche Länge eines Wolframfadens mit der gewünschten Stabilität und dem erforderlichen Widerstand in der erfindungsgemäßen Lichtquelle unterzubringen.

Die erfindungsgemäße Lichtquelle gibt im dargestellten Ausführungsbeispiels eine Lichtstärke von 4300 cd ab, wobei es sich versteht, daß die Lichtleistung in weiten Bereichen an die Erfordernisse anpaßbar ist.

Gemäß einer modifizierten Ausgestaltung ist es vorgesehen, daß aus Kunststoff bestehende Gehäuse, das per se einen Berührungsschutz gegen Netzspannung darstellt, zusätzlich zu erden. Hierzu ist es bevorzugt, das Gehäuse innen vollständig mit einer Metallschicht zu versehen, beispielsweise zu bedampfen, die mit einem Schutzleiter des dreiadrigen Netzkabels verbunden ist.

Gemäß einer modifizierten Ausgestaltung ist ein zusätzliches Innengehäuse vorgesehen, das die Schutzleiterbeschichtung trägt.

Gemäß einer weiteren Ausgestaltung ist eine Schutzmaßnahme auch gegen die - im Grunde geringe elektromagnetische Strahlung vorgesehen. Hierzu ist das Gehäuse mit Mu-Metall ausgekleidet, wobei es auch möglich ist, die Mu-Metallschicht mit dem Schutzleiter zu verbinden, um hierdurch sowohl eine elektrische als auch eine elektromagnetische Abschirmung zu erzielen.

Das aus Korpus 18 und Griff 24 bestehende Gehäuse des Lichthärtgeräts weist bevorzugt ein elektrisch isolierendes Material wie Kunststoff auf, dessen Wandstärke auf z.B. 5 mm erhöht ist. Die Spannungsfestigkeit des Gehäuses beträgt so ein Mehrfaches, insbesondere mindestens das Zehnfache, der Netzspannung. Als Netzspannung kann auf die je vorhandenen Spannungswerte zurückgegriffen werden, wobei diese Werte zwischen 100 V und 240 V liegen können. Die Kriechstrecken sind bevorzugt zusätzlich verlängert.

Gemäß einer weiteren Ausgestaltung weist das Lichthärtgerät ein zusätzliches isolierendes Innengehäuse auf, das die Fassung der Lichtquelle 20 und insbesondere die weiteren spannungsführenden Teile zusätzlich abdeckt.

Diese genannten Ausgestaltungen sind auch dann geeignet, wenn kein Schutzleiter zur Verfügung steht.

## Patentansprüche

1. Netzbetriebenes Lichthärtgerät (10) für lichtpolymerisierbare Dentalmassen, mit einem Lichtleiter (14) und einer Lichtquelle (20), die eine Glühwendel (36) und einen Reflektor (38) aufweist, der sich an einer von dem Lichtleiter abgewandten Seite der Glühwendel erstreckt und im Kühlluftstrom eines Gebläses (22) des Lichthärtgeräts liegt, **dadurch gekennzeichnet, daß** der Reflektor für Infrarotstrahlung im wesentlichen durchlässig ist, die Glühwendel (36) der in Halogentechnik ausgeführten Lichtquelle (20) an eine Steuerschaltung (28) angeschlossen ist, die eine Speisespannung von 100 Volt bis einschließlich zur Netzspannung von 240 Volt zur Verfügung stellt und wobei die Glühwendel (36) eine Lichtstärke von mehr als 750 cd, insbesondere von mehr als 4000 cd, abgibt.

2. Lichthärtgerät nach Anspruch 1, **dadurch gekennzeichnet, daß** die Steuerschaltung transformatorfrei, insbesondere über eine Phasenanschnittsteuerung eines Thyristors oder Triacs, eine beim Einschalten der Lichtquelle (20) allmählich zunehmende Speisespannung zur Verfügung stellt.

3. Lichthärtgerät nach einem der vorhergehenden Ansprüche, **dadurch gekennzeichnet, daß** die Steuerschaltung (28) einen Druckschalter umfaßt, dessen Betätigung abwechselnd das Lichthärtgerät (10) einschaltet und ausschaltet.

4. Lichthärtgerät nach einem der vorhergehenden Ansprüche, **dadurch gekennzeichnet, daß** das Lichthärtgerät (10) als Handgerät ausgebildet ist und im wesentlich eine Pistolenform aufweist, wobei ein Netzkabel für die Spannungsversorgung und Bereitstellung der Netzspannung sich von dem unteren Ende des Griffs wegerstreckt und in einem Netzstecker endet.

5. Lichthärtgerät nach einem der vorhergehenden Ansprüchen, **dadurch gekennzeichnet, daß** das Lichthärtgerät (10) in einem Gehäuse (18) aufgenommen ist, das auch die Steuerschaltung (28) aufnimmt und von dem sich transformatorlos ein Netzkabel (12) wegerstreckt, das für den Anschluss an die Netzspannung bestimmt ist.

6. Lichthärtgerät nach einem der vorhergehenden Ansprüche, **dadurch gekennzeichnet, daß** die Lichtquelle (20) als Hochvolt Halogenglühlampe ausgebildet ist und Steckkontakte aufweist, mit welchen sie in eine Fassung (34) des Lichthärtgeräts (10) einsteckbar ist.

7. Lichthärtgerät nach einem der Ansprüche 1 bis 5, **dadurch gekennzeichnet, daß** die Lichtquelle (20) als Hochvolt-Halogen glühlampe ausgebildet ist und ein Außen-Schraubgewinde aufweist, mit welchem sie in eine Fassung (34) des Lichthärtgeräts (10) einschraubbar ist.

8. Lichthärtgerät nach einem der vorhergehenden Ansprüche, **dadurch gekennzeichnet, daß** die Glühwendel (36) als Doppelwendel ausgebildet ist, die sich im gewendelten Zustand über mindestens 2, bevorzugt über etwa 4 cm erstreckt, wobei die Glühwendel (36) knapp neben der optischen Achse des Reflektors (38) mindestens zweimal abgebogen ist.

9. Lichthärtgerät nach einem der vorhergehenden Ansprüche, **dadurch gekennzeichnet, daß** die Glühwendel (36) in Seitenansicht betrachtet V-förmig abgebogen ist.

10. Lichthärtgerät nach einem der vorhergehenden Ansprüche, **dadurch gekennzeichnet, daß** das Gehäuse einen Korpus (18) sowie einen Griff (24) aufweist und aus einem elektrisch isolierendes Material, insbesondere Kunststoff, gebildet ist, dessen Spannungsfestigkeit ein Mehrfaches, insbesondere mindestens das Zehnfache, der Netzspannung beträgt.

11. Lichthärtgerät nach einem der vorhergehenden Ansprüche, **dadurch gekennzeichnet, daß** das Gehäuse des Lichthärtgeräts insbesondere innen mit einer Schutzschicht gegen elektrische und/oder elektromagnetische Strahlung, insbesondere aus Mu-Metall verkleidet ist.

12. Lichthärtgerät nach einem der vorhergehenden Ansprüche, **dadurch gekennzeichnet, daß** die Schutzschicht mit einem Schutzleiter des Netzkabels verbunden ist.

13. Lichthärtgerät nach einem der vorhergehenden Ansprüche, **dadurch gekennzeichnet, daß** das Lichthärtgerät ein zusätzliches isolierendes Innengehäuse aufweist, das die Fassung der Lichtquelle (20) und insbesondere die weiteren spannungsführenden Teile zusätzlich abdeckt.

## Claims

1. A mains-operated light curing apparatus (10) for photopolymerisable dental compounds, having an optical waveguide (14) and a light source (20) which has a lamp filament (36) and a reflector (38) which extends on one side of the lamp filament (36) remote from the optical waveguide and is situated in the cooling air flow of a fan (23) of the light curing apparatus, **characterised in that** the reflector is substantially permeable to infrared radiation, the lamp filament (36) of the light source (20), which is of a design using halogen technology, is connected to a control circuit (28) which makes available a supply voltage of from 100 volts up to and including the mains voltage of 240 volts, and wherein the lamp filament (36) emits a luminous intensity of more than 750 cd, in particular of more than 4000 cd.

2. A light curing apparatus according to Claim 1, **characterised in that** the control circuit makes available, without a transformer, in particular via a phase-angle control of a thyristor or triac, a supply voltage which gradually increases upon switching on the light source (20).

3. A light curing apparatus according to any one of the preceding Claims, **characterised in that** the control circuit (28) comprises a pushbutton switch, actuation of which alternately switches on and switches off the light curing apparatus (10).

4. A light curing apparatus according to any one of the preceding Claims, **characterised in that** the light curing apparatus (10) is in the form of a hand-operated device and is substantially pistol-shaped, wherein a mains lead for the voltage supply and making available the mains voltage extends away from the lower end of the handle and terminates in a mains plug.

5. A light curing apparatus according to any one of the preceding Claims, **characterised in that** the light curing apparatus (10) is accommodated in a housing (18) which also accommodates the control circuit (28) and from which there extends, without a transformer, a mains cable (12) which is intended for connection to the mains voltage.

6. A light curing apparatus according to any one of the preceding Claims, **characterised in that** the light source (20) is the form of a high-voltage halogen bulb and has plug contacts with which it can be inserted into a socket (34) of the light curing apparatus (10).

7. A light curing apparatus according to any one of Claims 1 to 5, **characterised in that** the light source (20) is in the form of a high-voltage halogen bulb and has an external screw-thread with which it can be screwed into a socket (34) of the light curing apparatus (10).

8. A light curing apparatus according to any one of the preceding Claims, **characterised in that** the lamp filament (36) is in the form of a coiled-coil filament which in the coiled state extends over at least 2 cm, preferably over approximately 4 cm, wherein the lamp filament (36) is bent over at least twice quite close to the optical axis of the reflector (38).

9. A light curing apparatus according to any one of the preceding Claims, **characterised in that** the lamp filament (36) is bent in a V-shape, viewed in side view.

10. A light curing apparatus according to any one of the preceding Claims, **characterised in that** the housing has a body (18) and a handle (24), and is formed from an electrically insulating material, in particular plastics material, the electric strength of which is a multiple of the mains voltage, in particular at least ten times the mains voltage.

11. A light curing apparatus according to any one of the preceding Claims, **characterised in that** the housing of the light curing apparatus is lined, in particular on the inside, with a protective layer against electric and/or electromagnetic radiation, in particular consisting of Mumetal.

12. A light curing apparatus according to any one of the preceding Claims, **characterised in that** the protective layer is connected to an earthed conductor of the mains lead.

13. A light curing apparatus according to any one of the preceding Claims, **characterised in that** the light curing apparatus has an additional insulating inner housing which covers the socket of the light source (20) and particularly the other live parts.

## Revendications

1. Appareil de photopolymérisation alimenté par réseau (10) pour des pâtes dentaires pouvant être photopolymérisées, avec un photoconducteur (14) et une source lumineuse (20) qui comprend un filament boudiné (36) et un réflecteur (38) qui s'étend sur un côté du filament boudiné ne faisant pas face au photoconducteur et repose dans le flux d'air de refroidissement d'un ventilateur (28) de l'appareil de photopolymérisation, **caractérisé en ce que** le réflecteur est pour l'essentiel perméable au rayonnement infrarouge, le filament boudiné (36) de la source lumineuse (20), réalisée suivant la technique de l'halogène, est raccordé à un circuit de commande (28) qui fournit une tension d'alimentation allant de 100 volts à, inclusivement, la tension de secteur de 240 volts, le filament boudiné (36) émettant une intensité lumineuse de plus de 750 cd, en particulier de plus de 4000 cd.

2. Appareil de photopolymérisation selon la revendication 1, **caractérisé en ce que** le circuit de commande fournit sans transformateur, en particulier par le biais d'une commande à phase d'un thyristor ou triac, une tension d'alimentation croissant progressivement lors de l'activation de la source lumineuse (20).

3. Appareil de photopolymérisation selon l'une des revendications précédentes, **caractérisé en ce que** le circuit de commande (28) comprend un interrupteur à pression dont l'actionnement active et désactive, en alternance, l'appareil de photopolymérisation (10).

4. Appareil de photopolymérisation selon l'une des revendications précédentes, **caractérisé en ce que** l'appareil de photopolymérisation (10) est réalisé en tant qu'appareil portatif et présente pour l'essentiel une forme de pistolet, dans lequel un câble secteur, servant à l'alimentation en tension et à la mise à disposition de la tension du secteur, s'étend à partir de l'extrémité inférieure de la poignée et se termine dans une fiche secteur.

5. Appareil de photopolymérisation selon l'une des revendications précédentes, **caractérisé en ce que** l'appareil de photopolymérisation (10) est logé dans un boîtier (18) qui loge aussi le circuit de commande (28) et à partir duquel s'étend, sans transformateur, un câble secteur (12) qui est destiné au raccord à la tension du secteur.

6. Appareil de photopolymérisation selon l'une des revendications précédentes, **caractérisé en ce que** la source lumineuse (20) est réalisée en tant que lampe halogène à voltage élevé et comprend des contacts à fiches au moyen desquels elle est enfichable dans une douille (34) de l'appareil de photopolymérisation (10).

7. Appareil de photopolymérisation selon l'une des revendications 1 à 5, **caractérisé en ce que** la source lumineuse (20) est réalisée en tant que lampe halogène à voltage élevé et comprend un filet de vis externe au moyen duquel elle peut être vissée dans une douille (34) de l'appareil de photopolymérisation (10).

8. Appareil de photopolymérisation selon l'une des revendications précédentes, **caractérisé en ce que** le filament boudiné (36) est configuré en tant que filament bispiralé qui s'étend, à l'état enroulé, sur au moins 2 cm et de préférence sur environ 4 cm, le filament boudiné (36) étant recourbé au moins deux fois, juste à côté de l'axe optique du réflecteur (38).

9. Appareil de photopolymérisation selon l'une des revendications précédentes, **caractérisé en ce que** le filament boudiné (36) est recourbé en forme de V si on l'examine sur une vue latérale.

10. Appareil de photopolymérisation selon l'une des revendications précédentes, **caractérisé en ce que** le boîtier comprend un corps (18) ainsi qu'une poignée (24) et est formé d'un matériau isolant électrique, en particulier de matière plastique, dont la résistance à la tension s'élève à plusieurs fois la tension secteur, notamment au moins au décuple.

11. Appareil de photopolymérisation selon l'une des revendications précédentes, **caractérisé en ce que** le boîtier de l'appareil de photopolymérisation est revêtu, en particulier à l'intérieur, d'une couche de protection contre le rayonnement électrique et/ou électromagnétique, composée notamment de mumétal.

12. Appareil de photopolymérisation selon l'une des revendications précédentes, **caractérisé en ce que** la couche de protection est reliée à un conducteur de protection du câble secteur.

13. Appareil de photopolymérisation selon l'une des revendications précédentes, **caractérisé en ce que** l'appareil de photopolymérisation comprend un boîtier interne isolant supplémentaire, qui recouvre en plus la douille de la source lumineuse (20) et, en particulier, les autres parties conductrices de tension.
